# EUROPÄISCHE PATENTSCHRIFT

(11) **EP 1 986 062 B1**
(45) Veröffentlichungstag und Bekanntmachung des Hinweises auf die Patenterteilung: **19.01.2011**
(21) Anmeldenummer: 08007497.4
(22) Anmeldetag: 17.04.2008
(51) Int. Cl.: G05B 19/042

(54) **Steuervorrichtung und Steuerverfahren für ein elektrisches Haushaltsgerät**
Control device and control method for an electric domestic appliance
Dispositif de commande et procédé de commande pour un appareil électroménager

(30) Priorität: 23.04.2007 DE 102007019102
(43) Veröffentlichungstag der Anmeldung: 29.10.2008
(73) Patentinhaber: Diehl AKO Stiftung & Co. KG, 88239 Wangen (DE)
(72) Erfinder: Simon, Helmut, 88260 Argenbühl (DE)
(74) Vertreter: Diehl Patentabteilung

(56) Entgegenhaltungen:
- EP-A- 0 702 103
- US-A- 4 245 309
- US-A- 4 275 464

## Beschreibung

Die vorliegende Erfindung betrifft eine Steuervorrichtung und ein Steuerverfahren für ein elektrisches Haushaltsgerät wie beispielsweise eine Waschmaschine.

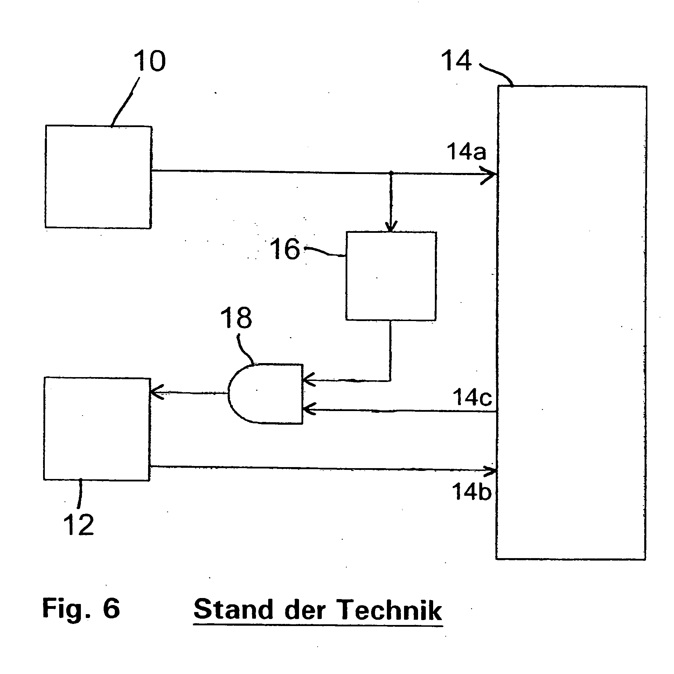

Fig. 6 zeigt einen der Anmelderin intern bekannten Stand der Technik. Wie in Fig. 6 dargestellt, weist ein elektrisches Haushaltsgerät (z.B. eine Waschmaschine) eine gefährliche, elektrisch steuerbare Komponente (z.B. Wäschetrommel) 10 auf, von der eine direkte oder indirekte Gefahr für den Benutzer ausgeht. Der Gefahrenzustand kann beispielsweise in einer Rotationsbewegung, einer hohen Temperatur oder einem hohen Wasserstand bestehen. Ein solcher Gefahrenzustand hat ein wertkontinuierliches Verhalten, d.h. es gibt einen Betriebszustand bzw. Signalwert, bei dem eine sehr große Gefahr herrscht, und es gibt mindestens einen Betriebszustand bzw. Signalwert, bei dem diese Gefahr als unbedeutend angesehen werden kann. Der jeweilige Betriebszustand der Komponente 10 steht an ihrem Ausgang in elektronisch auswertbarer Form zur Verfügung, sodass dieses Signal von einer Steuerung (Mikrocontroller) 14 an ihrem Eingang 14a direkt oder mittels einer hier nicht dargestellten Signalaufbereitungsstufe überwacht werden kann.

Um den Benutzer des Haushaltsgeräts vor der von der Komponente 10 ausgehenden Gefahr zu schützen, existiert weiter eine elektrisch oder elektronisch steuerbare Schutzkomponente 12, welche den Benutzer vor der jeweiligen Gefahr in geeigneter Art und Weise schützt. Bei der Schutzkomponente 12 handelt es sich beispielsweise um eine Türverriegelung einer Waschmaschine, die ein Öffnen der Tür und damit ein Berühren gefährlicher Teile durch den Benutzer verhindert. Der Betriebszustand der Schutzkomponente 12 wird von der Steuerung 14 direkt oder über eine Auswerteschaltung an ihrem Eingang 14b überwacht.

Die Aktivierung und Deaktivierung der Schutzkomponente 12 erfolgt von der Steuerung 14 über ihren Ausgang 14c. Alternativ kann die Aktivierung der

Schutzkomponente 12 beispielsweise durch Schließen der Türverriegelung einer Waschmaschine erfolgen. Eine unbeabsichtigte Deaktivierung der Schutzkomponente 12 (z.B. aufgrund einer Fehlfunktion der Steuerung 14) kann dabei zu einem gefährlichen Zustand führen.

Aus diesem Grund ist eine Schutzeinrichtung, eine so genannte PEC (Protective Electronic Circuit) vorgesehen, die aus einem Rückkopplungszweig 16 und einer logischen Verknüpfung 18 aufgebaut ist. Die Schutzeinrichtung 16-18 hat die Aufgabe, eine Deaktivierung der Schutzkomponente 12 durch ein möglicherweise fehlerhaft von der Steuerung 14 erzeugtes Steuersignal 14c zu verhindern, sofern von der gefährlichen Komponente 10 noch eine Gefahr ausgeht, wie oben beschrieben, was am Ausgangssignal der Komponente 10 erkennbar ist. Die Schutzeinrichtung 16-18 bildet eine zweite Schutzinstanz, wenn die eigentliche Deaktivierung der Schutzkomponente 12 vom Programmablauf der Steuerung 14 gesteuert wird.

Während die Schutzeinrichtung 16-18 in dem Beispiel von Fig. 6 aus Hardware-Komponenten aufgebaut ist, kann die Schutzeinrichtung 16-18 alternativ auch als Software-Lösung in der Steuerung 14 implementiert werden.

Ein möglicher Fehler in dieser Schutzeinrichtung 16-18 könnte dazu führen, dass zum Beispiel der Ausgang der Rückkopplungsschaltung 16 unabhängig vom Betriebszustand der gefährlichen Komponente 10 immer eine logische EINS ausgibt. Ein solcher Fehler könnte auch in der logischen Verknüpfung 18 passieren, mit der Folge, dass das Steuersignal 14c der Steuerung immer ungehindert passieren kann. Eine derartige Fehlfunktion der Schutzeinrichtung 16-18 bliebe zunächst unerkannt, weil die Steuerung 14 bestimmungsgemäß die Schutzkomponente 12 nur dann deaktiviert, wenn sich die gefährliche Komponente 10 in keinem Gefahrenzustand für den Benutzer befindet. Erst wenn die Steuerung 14 beispielsweise durch ein Fehlverhalten der implementierten Software ein Deaktivierungssignal 14c aussenden würde, während der Gefahrenzustand der gefährlichen Komponente 10 besteht, würde der Fehler in der Schutzeinrichtung 16-18 offenbar werden, weil ihre Schutzwirkung fehlte. Dann wäre aber der für den Benutzer gefährliche Zustand bereits eingetreten. Einen derartigen Fehler bezeichnet man auch als einen "schlafenden Fehler".

Der vorliegenden Erfindung liegt daher die Aufgabe zugrunde, eine Steuervorrichtung und ein Steuerverfahren für ein elektrisches Haushaltsgerät zu schaffen, die einen "schlafenden Fehler" der Schutzeinrichtung für die Schutzkomponente erkennen können, bevor es zu einer für den Benutzer gefährlichen Situation kommt.

Diese Aufgabe wird gelöst durch eine Steuervorrichtung mit den Merkmalen des Anspruchs 1 bzw. ein Steuerverfahren mit den Merkmalen des Anspruchs 8. Vorteilhafte Ausgestaltungen und Weiterbildungen der Erfindung sind Gegenstand der jeweiligen Unteransprüche.

Die Steuervorrichtung für ein elektrisches Haushaltsgerät, das eine Wäschetrommel und eine Türverriegelung zum Schutz des Benutzers vor einer Gefahr durch die Wäschetrommel aufweist, enthält eine Steuerung, die zum Überwachen der Betriebszustände der Wäschetrommel und der Türverriegelung sowie zum Aktivieren und/oder Deaktivieren der Türverriegelung ausgebildet ist; eine Schutzeinrichtung, die zum Verhindern einer Deaktivierung der Türverriegelung durch die Steuerung außerhalb eines Deaktivierungsbetriebsbereichs der Wäschetrommel, in dem eine Deaktivierung der Türverriegelung zulässig ist, ausgebildet ist; und eine Schutzeinrichtungs-Überwachungseinrichtung, die ausgebildet ist, um innerhalb eines Simulationsbetriebsbereichs der Wäschetrommel, in dem der Betriebszustand der Wäschetrommel für den Benutzer ungefährlich ist und der außerhalb des Deaktivierungsbetriebsbereichs der Wäschetrommel liegt, eine Deaktivierung der Türverriegelung zu veranlassen, wobei die Steuerung eine Fehlfunktion der Schutzeinrichtung erkennt, wenn bei einer durch die Schutzeinrichtungs-Überwachungseinrichtung veranlassten Deaktivierung der Türverriegelung die Türverriegelung tatsächlich deaktiviert wird.

Die Steuervorrichtung simuliert absichtlich ein fehlerhaftes Deaktivierungssignal für die Türverriegelung durch die Steuerung. Bei einer funktionsfähigen Schutzeinrichtung verhindert diese im Simulationsbetriebsbereich der Wäschetrommel die tatsächliche Deaktivierung der Türverriegelung. Falls jedoch eine Fehlfunktion der Schutzeinrichtung vorliegt, wird die Türverriegelung tatsächlich deaktiviert, was von der Steuerung erfasst wird. Die Steuerung erkennt die Fehlfunktion der Schutzeinrichtung und kann in geeigneter Weise reagieren, indem sie zum Beispiel den weiteren Betrieb des elektrischen Haushaltsgeräts verhindert. Diese Simulation erfolgt innerhalb eines für den Benutzer noch ungefährlichen Betriebsbereichs der Wäschetrommel, sodass für den Benutzer keine Gefahr entsteht.

In einer besonders kostengünstigen Ausführungsform der Erfindung können die Schutzeinrichtung und/oder die Schutzeinrichtungs-Überwachungseinrichtung als Softwaresequenzen in der Steuerung implementiert sein. Alternativ sind zur Verwirklichung der beiden Einrichtungen auch Hardware-Lösungen denkbar.

In einer speziellen Anwendung der Erfindung sind der Deaktivierungsbetriebsbereich und/oder der Simulationsbetriebsbereich der Wäschetrommel zum Beispiel über eine Drehzahl, einen Wasserstand und/oder eine Temperatur der Wäschetrommel definiert.

Die Schutzeinrichtungs-Überwachungseinrichtung kann die Türverriegelung wahlweise einmalig nach dem Einschalten des elektrischen Haushaltsgeräts; einmalig vor einem Programmablaufteil der Steuerung, bei dem ein Gefahrenzustand der Wäschetrommel auftreten könnte; in regelmäßigen Zeitintervallen; jeweils vor einem Programmablaufteil der Steuerung, bei dem ein Gefahrenzustand der Wäschetrommel auftreten könnte; oder fortlaufend deaktivieren.

In einer weiteren Ausgestaltung der Erfindung wird eine Fehlfunktion der Schutzeinrichtung durch wiederholtes Erkennen der Fehlfunktion verifiziert.

In einer noch weiteren Ausgestaltung der Erfindung wird bei einem Erkennen einer Fehlfunktion der Schutzeinrichtung durch die Steuervorrichtung ein weiterer Betrieb des elektrischen Haushaltgeräts verhindert.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig.1: ein vereinfachtes Blockschaltbild einer Steuervorrichtung für eine Waschmaschine, bei der die Erfindung einsetzbar ist;
- Fig. 2: ein Flussdiagramm eines normalen Steuerablaufs der Steuervorrichtung von Fig. 1;
- Fig. 3: ein vereinfachtes Blockschaltbild der Steuervorrichtung von Fig. 1 mit einer Schutzeinrichtung und einer Schutzeinrichtungs- Überwachungseinrichtung gemäß einem bevorzugten Ausführungsbei- spiel;
- Fig. 4: ein Flussdiagramm eines Steuerablaufs der Steuervorrichtung von Fig. 3;
- Fig. 5: ein vereinfachtes Blockschaltbild der Steuervorrichtung von Fig. 1 mit einer Schutzeinrichtung und einer alternativen Schutzeinrichtungs- Überwachungseinrichtung; und
- Fig. 6: ein vereinfachtes Blockschaltbild einer Steuervorrichtung mit einer Schutzeinrichtung gemäß dem Stand der Technik.

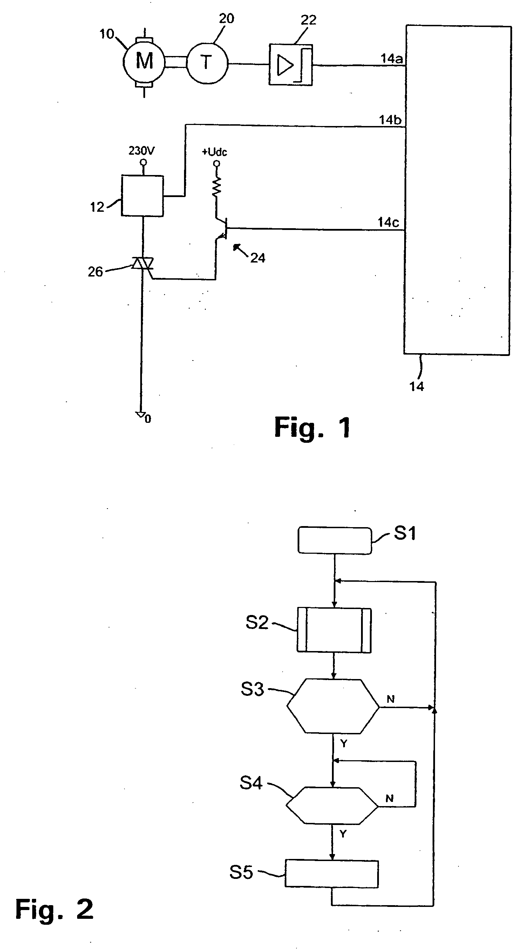

Anhand der Fig. 1 und 2 werden zunächst der Grundaufbau und die Funktionsweise einer Steuervorrichtung für ein elektrisches Haushaltsgerät am Beispiel einer Waschmaschine erläutert, bei denen die vorliegende Erfindung eingesetzt werden kann. Dabei sind gleiche bzw. äquivalente Bauteile mit den gleichen Bezugsziffern wie in der oben beschriebenen herkömmlichen Steuervorrichtung von Fig. 6 gekennzeichnet.

Die Waschmaschine weist eine gefährliche Komponente 10 in Form einer Wäschetrommel und eine Schutzkomponente 12 in Form einer Türverriegelung auf. Wenn die Tür der Waschmaschine geöffnet werden soll, ist sicherzustellen, dass zum Beispiel die Rotationsgeschwindigkeit der Wäschetrommel 10 einen bestimmten, für den Benutzer ungefährlichen Schwellenwert zum Zeitpunkt der Türöffnung nicht überschreitet. Der Motor, der die Wäschetrommel 10 antreibt, wird dabei in seiner Drehzahl von der Steuerung (Mikrocontroller) geregelt. Zu diesem Zweck überwacht die Steuerung 14 an ihrem Eingang 14a das Tachosignal, welches der Motor in seinem Tachogenerator 20 erzeugt und in einem A/D-Umsetzer 22 in ein digitales Signal umgesetzt wird, wobei die Frequenz des digitalen Signals proportional zur Drehzahl des Motors ist.

Die Steuerung 14 weist ferner einen Ausgang 14c zum Ausgeben eines Steuerbefehls zum Aktivieren und/oder Deaktivieren der Türverriegelung 12 auf. Alternativ kann die Aktivierung der Türverriegelung 12 durch Schließen der Tür der Waschmaschine erfolgen. Der Steuerbefehl zum Deaktivieren der Türverriegelung 12 erzeugt mit Hilfe der Ansteuerschaltung 24 ein Zündsignal für einen Triac 26, der die Verriegelung der Tür durch die Türverriegelung 12 freigibt. Der Betriebszustand der Türverriegelung 12 wird einem Kontrolleingang 14b der Steuerung 14 zurückgeführt, um den Zustand "Tür entriegelt" erkennen und ggf. anzeigen zu können.

Der "normale" Steuerablauf dieser Steuervorrichtung ist unter Bezug auf Fig. 2 wie folgt.

Nach dem Einschalten der Waschmaschine in Schritt S1 wird zunächst in Schritt S2 das Hauptsteuerprogramm ausgeführt. In Schritt S3 prüft die Steuerung 14, ob eine Anforderung zum Öffnen der Tür vorliegt. Wenn keine Anforderung zum Öffnen der Tür vorliegt ("N" in Schritt S3), kehrt der Steuerablauf zurück zu Schritt S2.

Soll dagegen die Tür geöffnet werden ("Y" in Schritt S3), so geht der Steuerablauf weiter zu Schritt S4, in dem bestimmt wird, ob eine erfasste Drehzahl des Motors der Wäschetrommel 10 niedriger als ein vorbestimmter Schwellenwert ist oder nicht. Liegt die Drehzahl noch oberhalb dieses Schwellenwerts ("N" in Schritt S4), so wird Schritt S4 wiederholt. Erst wenn die Drehzahl ausreichend niedrig ist ("Y" in Schritt S4), sodass der Deaktivierungsbetriebsbereich des Motors, d.h. kein Gefahrenzustand mehr für den Benutzer vorliegt, geht der Steuerablauf weiter zu Schritt S5, um die Türverriegelung 12 zu deaktivieren, d.h. die Tür zu entriegeln, damit sie vom Benutzer geöffnet werden kann.

Während in diesem Beispiel der Gefahrenzustand der gefährlichen Komponente 10 als eine hohe Drehzahl des Motors der Wäschetrommel angenommen worden ist, können alternativ oder zusätzlich auch ein hoher Wasserstand oder eine hohe Temperatur als Gefahrenzustand herangezogen werden.

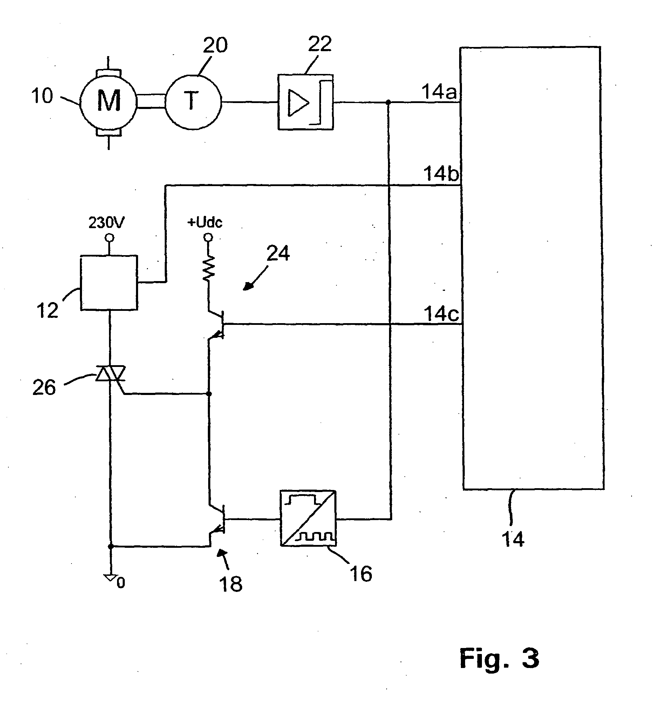

Um die Sicherheit der Waschmaschine gegen ein unzulässiges Entriegeln der Tür zu erhöhen, weist die Steuervorrichtung ferner eine Schutzeinrichtung auf, wie in Fig. 3 dargestellt.

Von der Signalleitung des Tachogenerators 20 zum Steuereingang 14a der Steuerung zweigt eine Rückkopplungsleitung ab, in der ein Integrator 16 vorgesehen ist, der aus dem rechteckförmigen Tachosignal so lange ein Ausgangssignal positiver Spannung erzeugt wie das Rechtecksignal an seinem Eingang anliegt. Dieses Ausgangssignal des Integrators 16 steuert einen Transistor 18 durch, der jegliches Zündsignal der Ansteuerschaltung 24 für den Triac 26 sperrt. Wenn das Tachosignal ausbleibt, d.h. der Motor steht, ändert sich das Ausgangssignal des Integrators 16 auf 0 V, sodass der Transistor 18 nichtleitend wird. Somit ist es jetzt für das Deaktivierungssignal 14c der Steuerung 14 möglich, auf dem oben beschriebenen Weg ein Zündsignal für den Triac 26 zu erzeugen und so die Türverriegelung 12 zu deaktivieren. Diese zusätzliche Schutzeinrichtung 16-18 bezeichnet man auch als PEC (Protective Electronic Circuit).

Wie in der Beschreibungseinleitung erläutert, besteht jedoch die Gefahr eines "schlafenden Fehlers", wenn diese Schutzeinrichtung eine Fehlfunktion hat. Falls dann zum Beispiel die Steuerung aufgrund eines weiteren Defekts bei einer hohen Motordrehzahl ein Deaktivierungssignal 14c an die Türverriegelung 12 ausgibt, wäre keine Schutzfunktion mehr vorhanden und die Tür würde trotz Gefahrenzustand des Motors bzw. der Wäschetrommel 10 entriegelt werden.

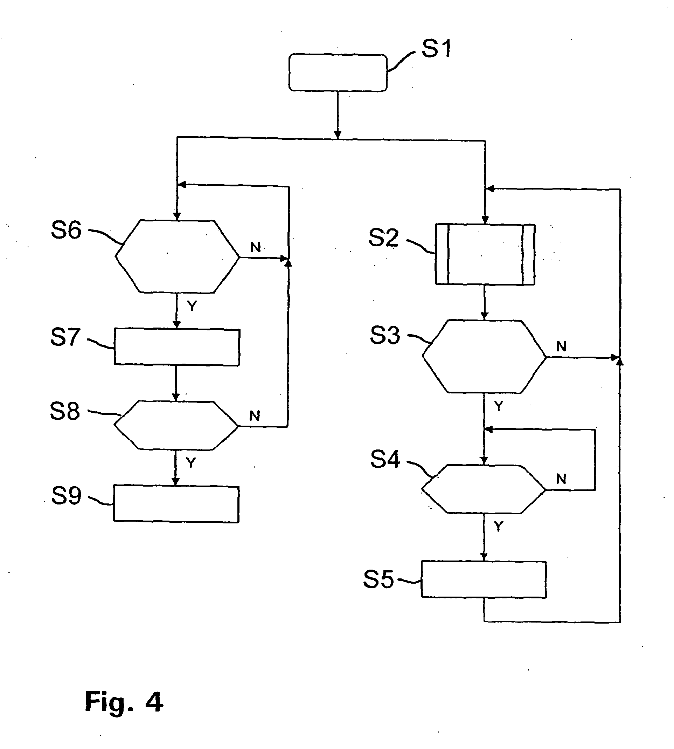

Um dieses Problem zu vermeiden, schlägt die Vorrichtung eine zusätzliche Schutzeinrichtungs-Überwachungseinrichtung für die Steuervorrichtung vor, die vorzugsweise als Softwaresequenz in der Steuerung 14 implementiert ist (d.h. ohne zusätzliche Hardware-Komponenten auskommt) und deren Funktionsweise anhand des Flussdiagramms von Fig. 4 nun näher erläutert wird.

Nach dem Einschalten der Waschmaschine in Schritt S1 werden einerseits der bereits anhand von Fig. 2 erläuterte "normale" Steuerablauf (Schritte S2 bis S5) und parallel dazu ein Steuerablauf der Schutzeinrichtungs-Überwachungseinrichtung (Schritte S6 bis S9) durchgeführt. Da der "normale" Steuerablauf der Schritte S2 bis S5 unverändert ist, wird auf eine Wiederholung seiner Beschreibung verzichtet.

Im Steuerablauf der Schutzeinrichtungs-Überwachungseinrichtung wird zunächst in Schritt S6 geprüft, ob sich die gefährliche Komponente 10 innerhalb ihres Simulationsbetriebsbereichs befindet, d.h. ob sie außerhalb ihres Deaktivierungsbetriebsbereichs ist, aber die Solldrehzahl des Motors der Wäschetrommel 10 noch unterhalb eines vorgegebenen Schwellenwerts liegt und sich die gefährliche Komponente 10 daher noch innerhalb eines für den Benutzer ungefährlichen Betriebsbereichs befindet. Die Beurteilung von Schritt S6 wird so lange wiederholt, bis sich der Motor im ungefährlichen Simulationsbetriebsbereich befindet ("Y" in Schritt S6). Wenn die Solldrehzahl des Motors so niedrig ist, dass die Tür noch gefahrlos geöffnet werden könnte, versucht die Schutzeinrichtungs-Überwachungseinrichtung, die Türverriegelung 12 in Schritt S7 durch ein entsprechendes Ansteuersignal zu deaktivieren.

Sofern die oben beschrieben Schutzeinrichtung 16-18 für die Türverriegelung 12 funktioniert, verhindert sie im Simulationsbetriebsbereich des Motors diese Deaktivierung der Türverriegelung 12. Wenn jedoch die Schutzeinrichtung eine Fehlfunktion zeigt, wird die Tür entriegelt. Indem in Schritt S8 überprüft wird, ob die Tür entriegelt worden ist oder nicht, d.h. ob die Türverriegelung 12 deaktiviert worden ist oder nicht, kann die Steuerung 14, der der Betriebszustand der Türverriegelung 12 an ihren Eingang 14b gemeldet wird, eine Fehlfunktion der Schutzeinrichtung 16-18 erkennen. Würde der obige Simulationsvorgang auch während des ungefährlichen Deaktivierungsbetriebsbereichs des Motors erfolgen, so würde die Schutzeinrichtung 16-18 die Deaktivierung der Schutzkomponente 12 bestimmungsgemäß zulassen, d.h. eine Fehlfunktion der Schutzeinrichtung wäre nicht erkennbar. Deshalb ist der Simulationsbetriebsbereich des Motors als sein ungefährlicher Betriebsbereich außerhalb des Deaktivierungsbetriebsbereichs festgelegt.

Bei Erkennen einer solchen Fehlfunktion der Schutzeinrichtung 16-18 ("Y" in Schritt S8) schaltet die Steuerung 14 in Schritt S9 in einen Fehlermodus, in dem zum Beispiel der weitere Betrieb der Waschmaschine (dauerhaft) verhindert wird. Arbeitet die Schutzeinrichtung 16-18 dagegen korrekt ("N" in Schritt S8), so kehrt der Steuerablauf zu Schritt S6 zurück, um die obige Simulation einer Deaktivierung der Türverriegelung 12 durch die Schutzeinrichtungs-Überwachungseinrichtung zu wiederholen.

Mit Hilfe dieser Schutzeinrichtungs-Überwachungseinrichtung (S6-S9) kann ein "schlafender Fehler" der Schutzeinrichtung 16-18 sicher erkannt werden, sodass ggf. geeignete Gegenmaßnahmen zur Verhinderung einer Gefährdung des Benutzers eingeleitet werden können.

Im oben beschriebenen Steuerablauf der Schutzeinrichtungs-Überwachungseinrichtung (S6-S9) wurde in Schritt S6 der ungefährliche Simulationsbetriebsbereich der gefährlichen Komponente 10 über eine Solldrehzahl des Motors der Wäschetrommel definiert. Alternativ oder zusätzlich kann hierzu auch die Istdrehzahl des Motors verwendet werden. In Abhängigkeit von der Art der gefährlichen Komponente 10 des elektrischen Haushaltsgeräts können hier natürlich auch andere Größen eingesetzt werden.

Weiter wurde in dem in Fig. 4 dargestellten Steuerablauf der Schutzeinrichtungs-Überwachungseinrichtung (S6-S9) die Simulation der Deaktivierung der Türverriegelung 12 fortlaufend durchgeführt. Im Rahmen der vorliegenden Erfindung kann dieser Vorgang alternativ aber auch folgendermaßen ausgeführt werden:
- einmalig nach dem Einschalten des elektrischen Haushaltsgeräts;
- einmalig vor einem Programmablaufteil der Steuerung 14, bei dem ein Gefahrenzustand der gefährlichen Komponente 10 auftreten könnte;
- in regelmäßigen Zeitintervallen, oder
- jeweils vor einem Programmablaufteil der Steuerung 14, bei dem ein Gefahrenzustand der gefährlichen Komponente 10 auftreten könnte.

Ferner wurde im obigen Steuerablauf von Fig. 4 nach einer erkannten Fehlfunktion der Schutzeinrichtung 16-18 in einen Fehlermodus (Schritt S9) geschaltet. Es ist ebenso möglich, den fehlerhaften Zustand der Schutzeinrichtung 16-18 zunächst durch eine Wiederholung der Verfahrensschritte S6 bis S8 zu verifizieren, bevor der Fehlerzustand abschließend erkannt und in den Fehlermodus geschaltet wird.

Außerdem wurde die Schutzeinrichtungs-Überwachungseinrichtung S6-S9 im oben beschriebenen Ausführungsbeispiel als Softwaresequenz in der Steuerung 14 implementiert. Auf diese Weise werden im Vergleich zu herkömmlichen Steuervorrichtungen keine zusätzlichen Hardware-Komponenten benötigt, und sie kann auch problemlos in bereits vorhandene Schaltungen implementiert werden.

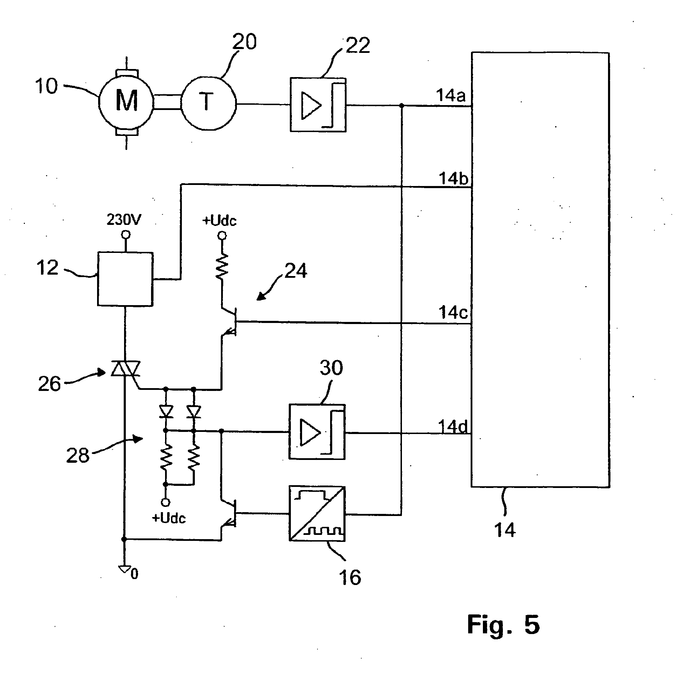

Alternativ ist es aber auch denkbar, die Schutzeinrichtungs-Überwachungseinrichtung mittels Hardware aufzubauen, wie dies in Fig. 5 veranschaulicht ist. Zusätzlich zum Aufbau der Steuervorrichtung von Fig. 3 weist die Steuervorrichtung hierzu eine Auskopplungseinrichtung 28 zum Auskoppeln des Ausgangssignals der Schutzeinrichtung 16-18 und einen A/D-Umsetzer 30 zum Digitalisieren des so ausgekoppelten Ausgangssignals auf.

Anhand des einem weiteren Eingang 14d zugeführten Ausgangssignals der Schutzeinrichtung 16-18 kann die Steuerung 14 die Funktionsfähigkeit der Schutzeinrichtung prüfen. Um ein Versagen dieser Schutzeinrichtungs-Überwachungseinrichtung 28-30 zu vermeiden, sind die Bauteile der Auskopplungseinrichtung 28 doppelt ausgeführt, wie in Fig. 5 dargestellt. Nachteilig bei dieser Variante sind die zusätzlich benötigten Hardware-Komponenten 28 und 30 sowie ein weiterer benötigter Eingang 14d am Mikrocontroller 14.

## Patentansprüche

1. Steuervorrichtung für ein elektrisches Haushaltsgerät, das eine Wäschetrommel (10) und eine Türverriegelung (12) zum Schutz des Benutzers vor einer Gefahr durch die Wäschetrommel (10) aufweist, mit einer Steuerung (14), ausgebildet zum Überwachen der Betriebszustände der Wäschetrommel (10) und der Türverriegelung (12) sowie zum Aktivieren und/oder Deaktivieren der Türverriegelung (12); und
einer Schutzeinrichtung (16-18), ausgebildet zum Verhindern einer Deaktivierung der Türverriegelung (12) durch die Steuerung (14) außerhalb eines Deaktivierungsbetriebsbereichs der Wäschetrommel (10), in dem eine Deaktivierung der Türverriegelung (12) zulässig ist,
**dadurch gekennzeichnet,**
**dass** die Steuervorrichtung ferner eine Schutzeinrichtungs-Überwachungseinrichtung (S6-S9) aufweist, die ausgebildet ist, um innerhalb eines Simulationsbetriebsbereichs der Wäschetrommel (10), in dem der Betriebszustand der Wäschetrommel (10) für den Benutzer ungefährlich ist und der außerhalb des Deaktivierungsbetriebsbereichs liegt, eine Deaktivierung der Türverriegelung (12) zu veranlassen; und
**dass** die Steuerung (14) weiter ausgebildet ist, um, wenn bei einer durch die Schutzeinrichtungs-Überwachungseinrichtung veranlassten Deaktivierung der Türverriegelung (12) die Türverriegelung (12) tatsächlich deaktiviert wird, eine Fehlfunktion der Schutzeinrichtung (16-18) zu erkennen.

2. Steuervorrichtung nach Anspruch 1,
**dadurch gekennzeichnet,**
**dass** die Schutzeinrichtungs-Überwachungseinrichtung (S6-S9) als Softwaresequenz in der Steuerung (14) implementiert ist.

3. Steuervorrichtung nach Anspruch 1 oder 2,
**dadurch gekennzeichnet,**
**dass** die Schutzeinrichtung (16-18) als Softwaresequenz in der Steuerung (14) implementiert ist.

4. Steuervorrichtung nach einem der Ansprüche 1 bis 3,
**dadurch gekennzeichnet,**
**dass** der Deaktivierungsbetriebsbereich und/oder der Simulationsbetriebsbereich der Wäschetrommel (10) über eine Drehzahl, einen Wasserstand und/oder eine Temperatur der Wäschetrommel definiert ist.

5. Steuervorrichtung nach einem der Ansprüche 1 bis 4,
**dadurch gekennzeichnet,**
**dass** die Schutzeinrichtungs-Überwachungseinrichtung (S6-S9) ausgebildet ist, um die Deaktivierung der Türverriegelung (12)
- einmalig nach dem Einschalten des elektrischen Haushaltsgeräts;
- einmalig vor einem Programmablaufteil der Steuerung (14), bei dem ein Gefahrenzustand der Wäschetrommel (10) auftreten könnte;
- in regelmäßigen Zeitintervallen;
- jeweils vor einem Programmablaufteil der Steuerung (14), bei dem ein Gefahrenzustand der Wäschetrommel (10) auftreten könnte; oder
- fortlaufend
durchzuführen.

6. Steuervorrichtung nach einem der Ansprüche 1 bis 5,
**dadurch gekennzeichnet,**
**dass** die Steuervorrichtung ausgebildet ist, um eine Fehlfunktion der Schutzeinrichtung (16-18) durch wiederholtes Erkennen der Fehlfunktion zu verifizieren.

7. Steuervorrichtung nach einem der Ansprüche 1 bis 6,
**dadurch gekennzeichnet,**
**dass** die Steuervorrichtung ausgebildet ist, um bei einem Erkennen einer Fehlfunktion der Schutzeinrichtung (16-18) einen Betrieb des elektrischen Haushaltgeräts zu verhindern.

8. Steuerverfahren für ein elektrisches Haushaltsgerät, das eine Wäschetrommel (10), eine Türverriegelung (12) zum Schutz des Benutzers vor einer Gefahr durch die Wäschetrommel (10) und eine Steuerung (14) zum Aktivieren und/oder Deaktivieren der Türverriegelung (12) aufweist, mit den Schritten:
Überwachen der Betriebszustände der Wäschetrommel (10) und der Türverriegelung (12) durch die Steuerung (14);
Verhindern einer Deaktivierung der Türverriegelung (12) durch die Steuerung (14) außerhalb eines Deaktivierungsbetriebsbereichs der Wäschetrommel (10), in dem eine Deaktivierung der Türverriegelung (12) zulässig ist;
Veranlassen einer Deaktivierung der Türverriegelung (12) innerhalb eines Simulationsbetriebsbereichs der Wäschetrommel (10), in dem der Betriebszustand der Wäschetrommel (10) für den Benutzer ungefährlich ist und der außerhalb des Deaktivierungsbetriebsbereichs liegt, durch eine Schutzeinrichtungs-Überwachungseinrichtung (S6-S9); und;
Erkennen einer Fehlfunktion der Schutzeinrichtung (16-18), wenn bei einer durch die Schutzeinrichtungs-Überwachungseinrichtung veranlassten Deaktivierung der Türverriegelung (12) die Türverriegelung (12) tatsächlich deaktiviert wird.

9. Steuerverfahren nach Anspruch 8,
**dadurch gekennzeichnet,**
**dass** der Deaktivierungsbetriebsbereich und/oder der Simulationsbetriebsbereich der Wäschetrommel (10) über eine Drehzahl, einen Wasserstand und/oder eine Temperatur der Wäschetrommel definiert ist.

10. Steuerverfahren nach Anspruch 8 oder 9,
**dadurch gekennzeichnet,**
**dass** die Schutzeinrichtungs-Übenrwachungseinrichtung (S6-S9) die Türverriegelung (12)
- einmalig nach dem Einschalten des elektrischen Haushaltsgeräts;
- einmalig vor einem Programmablaufteil der Steuerung (14), bei dem ein Gefahrenzustand der Wäschetrommel (10) auftreten könnte;
- in regelmäßigen Zeitintervallen;
- jeweils vor einem Programmablaufteil der Steuerung (14), bei dem ein Gefahrenzustand der Wäschetrommel (10) auftreten könnte; oder
- fortlaufend
deaktiviert.

11. Steuerverfahren nach einem der Ansprüche 8 bis 10,
**dadurch gekennzeichnet,**
**dass** eine erkannte Fehlfunktion der Schutzeinrichtung (16-18) durch wiederholtes Erkennen der Fehlfunktion verifiziert wird.

12. Steuerverfahren nach einem der Ansprüche 8 bis 11,
**dadurch gekennzeichnet,**
**dass** bei einem Erkennen einer Fehlfunktion der Schutzeinrichtung (16-18) ein Betrieb des elektrischen Haushaltgeräts verhindert wird.

## Claims

1. Control apparatus for an electrical domestic appliance which has a laundry drum (10) and a door lock (12) for protecting the user against a danger presented by the laundry drum (10), having
a control means (14) designed to monitor the operating states of the laundry drum (10) and the door lock (12) and also to activate and/or deactivate the door lock (12); and
a protection device (16-18) designed to prevent deactivation of the door lock (12) by the control means (14) outside a deactivation operating range of the laundry drum (10), in which range deactivation of the door lock (12) is permissible,
**characterized**
**in that** the control apparatus also has a protection-device monitoring device (S6-S9) which is designed in order to initiate deactivation of the door lock (12) within a simulation operating range of the laundry drum (10), in which range the operating state of the laundry drum (10) does not present a danger to the user and which range is outside the deactivation operating range; and
**in that** the control means (14) is also designed in order to identify a malfunction of the protection device (16-18) if the door lock (12) is actually deactivated when deactivation of the door lock (12) is initiated by the protection-device monitoring device.

2. Control apparatus according to Claim 1,
**characterized**
**in that** the protection-device monitoring device (S6-S9) is implemented as a software sequence in the control means (14).

3. Control apparatus according to Claim 1 or 2,
**characterized**
**in that** the protection device (16-18) is implemented as a software sequence in the control means (14).

4. Control apparatus according to one of Claims 1 to 3,
**characterized**
**in that** the deactivation operating range and/or the simulation operating range of the laundry drum (10) are/is defined by means of the rotational speed, the water level and/or the temperature of the laundry drum.

5. Control apparatus according to one of Claims 1 to 4, **characterized in that** the protection-device monitoring device (S6-S9) is designed in order to deactivate the door lock (12)
- once after the electrical domestic appliance is switched on;
- once before a program sequence portion of the control means (14), in which portion a dangerous state of the laundry drum (10) could occur;
- at regular time intervals;
- in each case before a program sequence portion of the control means (14), in which portion a dangerous state of the laundry drum (10) could occur; or
- continuously.

6. Control apparatus according to one of Claims 1 to 5,
**characterized**
**in that** the control apparatus is designed in order to verify a malfunction of the protection device (16-18) by repeated identification of the malfunction.

7. Control apparatus according to one of Claims 1 to 6,
**characterized**
**in that** the control apparatus is designed in order to prevent operation of the electrical domestic appliance when a malfunction of the protection device (16-18) is identified.

8. Control method for an electrical domestic appliance which has a laundry drum (10) and a door lock (12) for protecting the user against a danger presented by the laundry drum (10), and a control means (14) for activating and/or deactivating the door lock (12), comprising the steps of:
monitoring the operating states of the laundry drum (10) and the door lock (12) by the control means (14);
preventing deactivation of the door lock (12) by the control means (14) outside a deactivation operating range of the laundry drum (10), in which range deactivation of the door lock (12) is permissible;
initiating deactivation of the door lock (12) within a simulation operating range of the laundry drum (10), in which range the operating state of the laundry drum (10) does not present a danger to the user and which range is outside the deactivation operating range, by a protection-device monitoring device (S6-S9); and
identifying a malfunction of the protection device (16-18) if the door lock (12) is actually deactivated when deactivation of the door lock (12) is initiated by the protection-device monitoring device.

9. Control method according to Claim 8,
**characterized**
**in that** the deactivation operating range and/or the simulation operating range of the laundry drum (10) are/is defined by means of the rotational speed, the water level and/or the temperature of the laundry drum.

10. Control apparatus according to Claim 8 or 9,
**characterized**
**in that** the protection-device monitoring device (S6-S9) activates the door lock (12)
- once after the electrical domestic appliance is switched on;
- once before a program sequence portion of the control means (14), in which portion a dangerous state of the laundry drum (10) could occur;
- at regular time intervals;
- in each case before a program sequence portion of the control means (14), in which portion a dangerous state of the laundry drum (10) could occur; or
- continuously.

11. Control method according to one of Claims 8 to 10,
**characterized**
**in that** an identified malfunction of the protection device (16-18) is verified by repeated identification of the malfunction.

12. Control method according to one of Claims 8 to 11,
**characterized**
**in that** operation of the electrical domestic appliance is prevented when a malfunction of the protection device (16-18) is identified.

## Revendications

1. Dispositif de commande pour un appareil électroménager, lequel présente un tambour de lavage (10) et un dispositif de verrouillage de porte (12) pour protéger l'utilisateur contre un danger résultant du tambour de lavage (10), comprenant
une commande (14), configurée pour surveiller les états de fonctionnement du tambour de lavage (10) et du dispositif de verrouillage de porte (12) ainsi que pour activer et/ou désactiver le dispositif de verrouillage de porte (12) ; et
un dispositif de protection (16-18) configuré pour empêcher une désactivation du dispositif de verrouillage de porte (12) par la commande (14) en dehors d'une plage opérationnelle de désactivation du tambour de lavage (10) dans laquelle une désactivation du dispositif de verrouillage de porte (12) est autorisée,
**caractérisé en ce que**
le dispositif de commande présente en outre un dispositif de surveillance du dispositif de protection (S6-S9) qui est configuré pour initier une désactivation du dispositif de verrouillage de porte (12) à l'intérieur d'une plage opérationnelle de simulation du tambour de lavage (10) dans laquelle l'état de fonctionnement du tambour de lavage (10) est sans danger pour l'utilisateur et qui se trouve en dehors de la plage opérationnelle de désactivation ; et **en ce que** la commande (14) est en plus configurée pour détecter un défaut de fonctionnement du dispositif de protection (16-18) lorsque, dans le cas d'une désactivation du dispositif de verrouillage de porte (12) initiée par le dispositif de surveillance du dispositif de protection, le dispositif de verrouillage de porte (12) est effectivement désactivé.

2. Dispositif de commande selon la revendication 1, **caractérisé en ce que** le dispositif de surveillance du dispositif de protection (S6-S9) est mis en oeuvre sous la forme d'une séquence logicielle dans la commande (14).

3. Dispositif de commande selon la revendication 1 ou 2, **caractérisé en ce que** le dispositif de protection (16-18) est mis en oeuvre sous la forme d'une séquence logicielle dans la commande (14).

4. Dispositif de commande selon l'une des revendications 1 à 3, **caractérisé en ce que** la plage opérationnelle de désactivation et/ou la plage opérationnelle de simulation du tambour de lavage (10) sont définies par une vitesse de rotation, un niveau d'eau et/ou une température du tambour de lavage.

5. Dispositif de commande selon l'une des revendications 1 à 4, **caractérisé en ce que** le dispositif de surveillance du dispositif de protection (S6-S9) est configuré pour réaliser la désactivation du dispositif de verrouillage de porte (12)
- une fois après la mise en marche de l'appareil électroménager ;
- une fois avant une partie d'exécution du programme de la commande (14) lors de laquelle pourrait survenir une situation dangereuse du tambour de lavage (10) ;
- à intervalles de temps réguliers ;
- à chaque fois avant une partie d'exécution du programme de la commande (14) lors de laquelle pourrait survenir une situation dangereuse du tambour de lavage (10) ; ou
- continuellement.

6. Dispositif de commande selon l'une des revendications 1 à 5, **caractérisé en ce que** le dispositif de commande est configuré pour vérifier un défaut de fonctionnement du dispositif de protection (16-18) par une détection répétée du défaut de fonctionnement.

7. Dispositif de commande selon l'une des revendications 1 à 6, **caractérisé en ce que** le dispositif de commande est configuré pour, en cas de détection d'un défaut de fonctionnement du dispositif de protection (16-18), empêcher le fonctionnement de l'appareil électroménager.

8. Procédé de commande pour un appareil électroménager, lequel présente un tambour de lavage (10), un dispositif de verrouillage de porte (12) pour protéger l'utilisateur contre un danger résultant du tambour de lavage (10) et une commande (14) pour activer et/ou désactiver le dispositif de verrouillage de porte (12), comprenant les étapes suivantes :
Surveillance des états de fonctionnement du tambour de lavage (10) et du dispositif de verrouillage de porte (12) par la commande (14) ;
Empêchement d'une désactivation du dispositif de verrouillage de porte (12) par la commande (14) en dehors d'une plage opérationnelle de désactivation du tambour de lavage (10) dans laquelle une désactivation du dispositif de verrouillage de porte (12) est autorisée ;
Initiation d'une désactivation du dispositif de verrouillage de porte (12) à l'intérieur d'une plage opérationnelle de simulation du tambour de lavage (10) dans laquelle l'état de fonctionnement du tambour de lavage (10) est sans danger pour l'utilisateur et qui se trouve en dehors de la plage opérationnelle de désactivation, par un dispositif de surveillance du dispositif de protection (S6-S9) ; et
Détection d'un défaut de fonctionnement du dispositif de protection (16-18) lorsque, dans le cas d'une désactivation du dispositif de verrouillage de porte (12) initiée par le dispositif de surveillance du dispositif de protection, le dispositif de verrouillage de porte (12) est effectivement désactivé.

9. Procédé de commande selon la revendication 8, **caractérisé en ce que** la plage opérationnelle de désactivation et/ou la plage opérationnelle de simulation du tambour de lavage (10) sont définies par une vitesse de rotation, un niveau d'eau et/ou une température du tambour de lavage.

10. Procédé de commande selon la revendication 8 ou 9, **caractérisé en ce que** le dispositif de surveillance du dispositif de protection (S6-S9) désactive le dispositif de verrouillage de porte (12)
- une fois après la mise en marche de l'appareil électroménager ;
- une fois avant une partie d'exécution du programme de la commande (14) lors de laquelle pourrait survenir une situation dangereuse du tambour de lavage (10) ;
- à intervalles de temps réguliers ;
- à chaque fois avant une partie d'exécution du programme de la commande (14) lors de laquelle pourrait survenir une situation dangereuse du tambour de lavage (10) ; ou
- continuellement.

11. Procédé de commande selon l'une des revendications 8 à 10, **caractérisé en ce qu'**un défaut de fonctionnement détecté du dispositif de protection (16-18) est vérifié par une détection répétée du défaut de fonctionnement.

12. Procédé de commande selon l'une des revendications 8 à 11, **caractérisé en ce qu'**en cas de détection d'un défaut de fonctionnement du dispositif de protection (16-18), le fonctionnement de l'appareil électroménager est empêché.
